# EUROPEAN PATENT APPLICATION

(11) **EP 2 075 951 A1**
(43) Date of publication of application: **01.07.2009**
(21) Application number: 08700114.5
(22) Date of filing: 14.01.2008
(51) Int. Cl.: H04L 12/14, H04Q 7/38, H04Q 7/22, H04M 15/00, H04M 7/00

(54) **A METHOD, SYSTEM AND APPARATUS FOR IMPLEMENTING CALL SERVICE**

(30) Priority: 31.01.2007 CN 200710003065
(71) Applicant: Huawei Technologies Co., Ltd., Shenzhen, Guangdong Province 518129 (CN)
(72) Inventor: WANG, Lin, Shenzhen Guangdong 518129 (CN); CHEN, Liang, Shenzhen Guangdong 518129 (CN)
(74) Representative: Gulde Hengelhaupt Ziebig & Schneider
(86) International application number: PCT/CN2008/070101
(87) International publication number: WO 2008/095426

(57) **Abstract**

A method, system and apparatus for implementing call service are provided. The Unstructured Supplementary Service Data CALL BACK (UCB) exchanging side receives the call request for UCB service initiated from the roaming intelligent user and interprets it, and initiates the respective call process of the calling user and the called user respectively based on the interpreted information of the calling user and the called user, so as to establish the call connection from the UCB interchanging side to the calling user, and the call connection from the UCB interchanging side to the called user; the UCB interchanging side establishes the bridge connection for the said two half segment of call connection, the calling user and the called user realize call of the UCB service through the said connection, the UCB interchanging side performs charging control for the call of the calling user and the called user by triggering the called processes of the home SCPs of the calling user and the called user. According to the invention, the UCB service recognition processing and call jointing is performed by the UCB interchanging side, and the charging control is achieved by the SCP, so that the process for SCP instructing the UCB interchanging side to perform UCB service recognition and call jointis avoided and the implementability of UCB service is improved.

## Description

### Field of the Invention

The present invention relates to the technical field of network communications, and in particular, to a method for implementing a calling service, a system for implementing a calling service, a call processing device, a service switching point and an Unstructured Supplementary Service Data CALL BACK (UCB) switching system.

### Background of the Invention

The UCB service has been widely used in the international roaming of intelligent users.

For intelligent users, when the network of the roaming country dose not support Customized Application for Mobile Enhanced Logic (CAMEL) protocol, the Mobile Switching Centre (MSC) of the roaming area cannot trigger the intelligent service of the home area of the intelligent user. Thus, two methods are provided so as to implement a calling and a charging for the international roaming intelligent user.

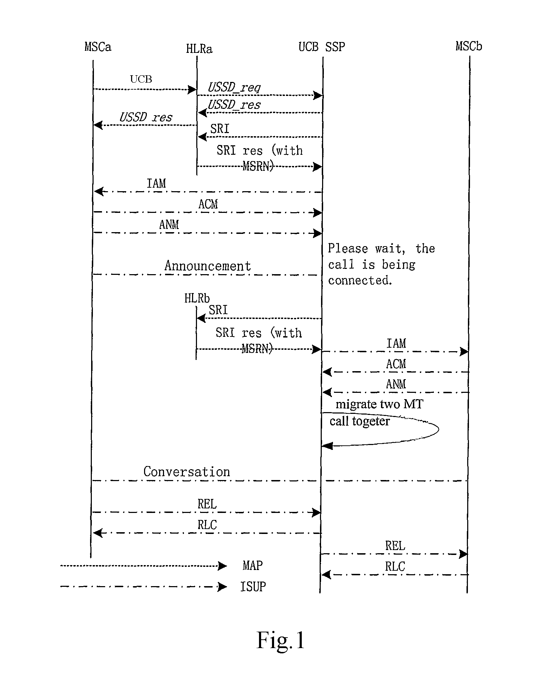

The first method: The Home Location Register (HLR) is configured to close the calling-out right of the international roaming intelligent user and open the incoming-call receiving right. The roaming intelligent user initiates a call request via a USSD message, and the network initiates a call to the calling number and a call to the called number and connects the two calls, thereby meeting the conversation requirement of the international roaming intelligent user. The method includes the following steps as shown in Figure 1:

Step 1: User A sends a USSD request for initiating a UCB call. A Service Switch Point (SSP) resolves the USSD request, queries the roaming number of user A from the HLR, and initiates a call to user A according to the roaming number of user A.

Step 2: The SSP queries the roaming number of user B from the HLR to which user B pertains according to the called number in the USSD request, and initiates a call to user B.

Step 3: The SSP connects the connection between the call to user A initiated by the network and the call to user B initiated by the network, thereby implementing the conversation between user A and user B.

When the conversation ends because user A or user B hangs up, the SSP releases the call.

In the first method, because the SSP dose not have the CAMEL capability, in the case that user A and user B are intelligent users, the SSP cannot directly implement an intelligent service charging for the UCB call. Instead, the SSP charge the UCB conversation with call bill.

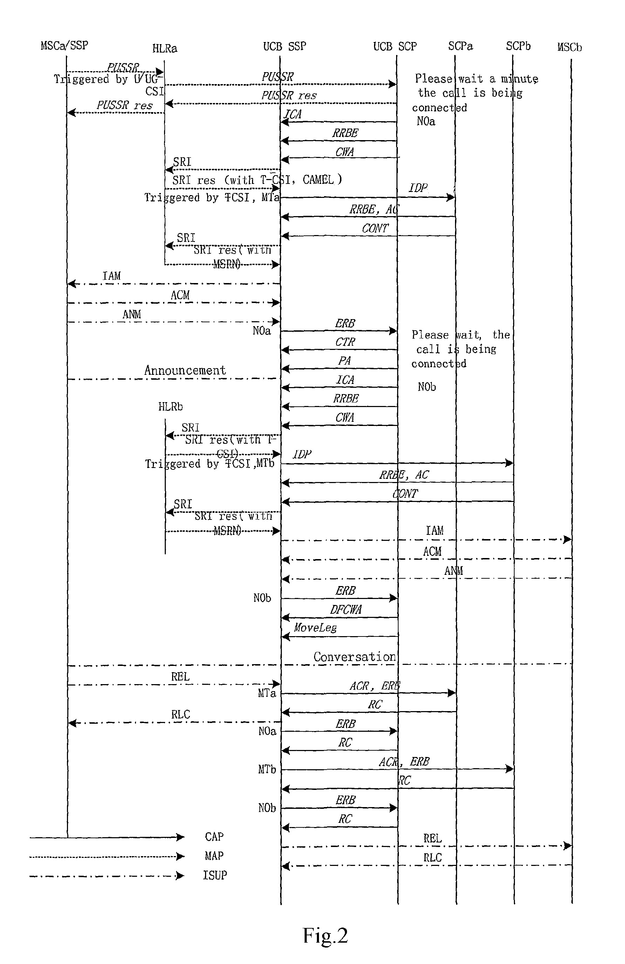

The second method: The calling service is implemented by a UCB Service Controlling Point (UCB SCP) in cooperation with a UCB SSP. The method includes the following steps as shown in Figure 2:

Step 1: User A sends a USSD request for initiating a UCB call and the USSD request is routed to a UCB SCP.

Step 2: The UCB SCP resolves the USSD request and identifies the calling number and the called number of the UCB call. The UCB SCP performs information interaction with the UCB SSP, and instructs the UCB SSP to connect user A first and then connect user B via a CAP (CAMEL Application Part) signaling such as Initial Call Attempt (ICA) operation.

Step 3: The UCB SSP has the CAMEL capability and may receive the CAP signaling instruction sent by the UCB SCP. In other words, the UCB SSP may receive an ICA operation instruction sent by the UCB SCP.

Step 4: After the UCB SSP receives the ICA operation instruction, the UCB SSP initiates a call to user A and user B respectively. The process in which the UCB SSP initiates the call is as follows. The UCB SSP obtains the CAMEL Subscription Information (CSI) from the HLRs to which user A and user B pertain and sends an Initial Detection Point (IDP) message to SCPa to which user A pertains and SCPb to which user B pertains respectively, and SCPa and SCPb trigger a Mobile Terminated (MT) called process of user A and user B respectively according to a normal process.

Step 5: The UCB SCP instructs the UCB SSP to connect the two calls of user A and user B via a MOVELEG operation instruction, thereby implementing the conversation between user A and user B.

Step 6: The UCB SCP implements a normal CAMEL charging according to the MT called process of user A and user B.

When the conversation ends because user A or user B hangs up, the UCB SSP releases the call.

In the second method, the network needs to cooperate with the intelligent user side to implement the call connection between user A and user B, and both the UCB SSP and the UCB SCP need to support CAMEL 4 capability. In other words, the UCB SSP needs to have CAMEL 4 capability and be able to receive the CAP signaling instruction sent by the UCB SCP; moreover, the UCB SSP may initiate a network call to user A and user B respectively under the control of the UCB SCP, and establishes a connection between the two calls of user A and user B. However, in practical application, the UCB SSP usually does not support CAMEL 4. Moreover, the UCB SSP and the UCB SCP are usually fabricated by different manufacturers, and thus it is difficult to implement the cooperation between devices fabricated by different manufacturers.

### Summary of the Invention

The embodiments of the invention provide a method, a system and a device for implementing a calling service. Therefore, a new and easy-to-use technical solution for implementing a calling service is provided, and it is convenient for the network to perform a charging process on a roaming intelligent user.

One embodiment of the invention provides a method for implementing a calling service, including:
receiving and resolving, by a UCB switch, a call request of a UCB service initiated by an intelligent user, initiating a call process of a calling user and a call process of a called user respectively according to information of the calling and called users resolved, and establishing a call between the UCB switch and the calling user and a call between the UCB switch and the called user;
establishing, by the UCB switch, a connection between the two calls so that the calling user and the called user implement a conversation of the UCB service according to the connection; and triggering, by the UCB switch, the SCP to which the calling user pertains and the SCP to which the called user pertains to implement a charging process on the conversation respectively.

One embodiment of the invention provides a system for implementing a calling service, including: an Unstructured Supplementary Service Data CALL BACK, UCB, switch and a Service Controlling Point, SCP, and the UCB switch includes:
a call processing device, adapted to receive and resolve a call request of a UCB service initiated by a roaming intelligent user, trigger a SCP to which a calling user pertains and a SCP to which a called user pertains, initiate a call process of the calling user and a call process of the called user respectively, establish a call between the UCB switch and the calling user and a call between the UCB switch and the called user and establish a connection between the two calls; and
an SCP, adapted to implement a charging process on a conversation between the calling user and the called user based on the connection according to the triggering.

One embodiment of the invention provides a call processing device located on a UCB switch, including:
a call processing module, adapted to receive a call request of a UCB service sent by a roaming intelligent user, resolve information of a calling user and a called user from the call request, initiate a call to the calling user and a call to the called user respectively according to the information of the calling user and the called user resolved, and establish a connection between the two calls; and
a call control module, adapted to trigger a called process of the calling user and a called process of the called user respectively to the SCP to which the calling user pertains and the SCP to which the called user pertains according to the information of the calling user and the called user resolved by the call processing module.

One embodiment of the invention provides an SSP including:
a call processing module, adapted to receive a call request of a UCB service sent by a roaming intelligent user, resolve information of a calling user and a called user from the call request, initiate a call to the calling user and a call to the called user respectively according to the information of the calling user and the called user resolved, and establish a connection between the two calls; and
a call control module, adapted to trigger a called process of the calling user and a called process of the called user respectively to the SCP to which the calling user pertains and the SCP to which the called user pertains according to the information of the calling user and the called user resolved by the call processing module.

One embodiment of the invention provides a UCB switching system, including:
a call processing module, adapted to receive a call request of a UCB service sent by a roaming intelligent user, resolve information of a calling user and a called user from the call request, initiate a call to the calling user and a call to the called user respectively according to the information of the calling user and the called user resolved, and establish a connection between the two calls; and
a call control module, adapted to trigger a called process of the calling user and a called process of the called user respectively to the SCP to which the calling user pertains and the SCP to which the called user pertains according to the information of the calling user and the called user resolved by the call processing module.

It may be seen from the description of the above technical solution that, in the embodiments of the invention, the UCB switch may establish a conversation between the calling user and the called user without cooperating with an intelligent network, so that the process in which the UCB switch establishes a call by performing a signaling interaction with the intelligent network may be avoided. The UCB switch may support CAMEL2. Therefore, the technical solutions according to the embodiments of the invention have good feasibility and are easy to implement. The embodiments of the invention provide a new technical solution for implementing a calling service to roaming intelligent users and it is convenient to implement a charging process on roaming intelligent users.

### Brief Description of the Drawings

Figure 1 is a first flow chart for implementing a calling service of a roaming intelligent user in the conventional art;

Figure 2 is a second flow chart for implementing a calling service of a roaming intelligent user in the conventional art;

Figure 3 is a first flow chart for implementing a calling service of a roaming intelligent user according to one embodiment of the invention; and

Figure 4 is a second flow chart for implementing a calling service of a roaming intelligent user according to one embodiment of the invention.

### Detailed Description of the Embodiments

In an embodiment of the invention, first, a roaming intelligent user initiates a USSD Call Back (UCB) service call, in other words, a roaming intelligent user sends a USSD request to the UCB switch. The UCB switch resolves the USSD request to obtain the calling user information and the called user information and so on. The USSD request of the roaming intelligent user may be received by an SSP on the UCB switch, or by other network devices on the UCB switch. When the network device that receives the USSD request is an SSP, the SSP may be referred to as UCB SSP. In other words, in the embodiment of the invention, the USSD request may be resolved by the UCB SSP so as to obtain the calling user information and the called user information.

After the UCB switch obtains the calling user information and the called user information, the UCB switch initiates a call process of the calling user to establish a call connection between the UCB switch and the calling user. The UCB switch respectively establishes two call connections including a call connection between the UCB switch and the calling user and a call connection between the UCB switch and the called user. After the UCB switch initiates a call process between the calling and called users, the UCB switch combines the two call connections together; in other words, the UCB switch combines the two call connections into a call connection between the calling user and the called user. Thus, a conversation of USSD Call Back service may be implemented between the calling user and the called user based on the connection combined and established by the UCB switch.

The UCB switch according to the embodiment of the invention further needs to trigger the intelligent network side to charge the calling user and the called user, in other words, the UCB switch triggers a called process of the calling user to the SCP to which the calling user pertains and triggers a called process of the called user to the SCP to which the called user pertains. The above triggering processes may be performed when the UCB switch initiates a call, or before the UCB switch initiates a call. In the embodiment of the invention, the order in which the UCB switch initiates the call and triggers the called process is not limited.

In the embodiment of the invention, the called process between the calling and called users may be triggered by a UCB SSP, and the called process between the calling and called users may also be triggered by a network device independent of the UCB SSP. The UCB SSP or other network devices may trigger a called process of the calling user and the called user via CAMEL. The UCB switch may also trigger the SCP to charge the conversation between the calling and called users using other protocols. In the embodiment of the invention, the type of the protocol for triggering the SCP to charge the conversation between the calling and called users is not limited.

In the case that the UCB switch triggers the called process of the calling user and the called user via CAMEL, the UCB switch needs to support CAMEL2. Moreover, the UCB switch does not execute the signaling of the intelligent network side and the process that the UCB switch cooperates with the intelligent network side to implement UCB service may be avoided. Therefore, the implementation of UCB service may be simplified and the practicability of UCB service may be improved.

When the UCB switch triggers a called process of the calling user and the called user via CAMEL, the UCB switch may implement the UCB service call via a call processing module and a call control module. Where, the call control module has signaling processing capability, for example, the call control module has CAMEL signaling processing capability and is able to trigger a called process of the calling user and the called user to the SCPs to which the calling user and the called user pertain via CAMEL signaling.

The call processing module is adapted to receive a call request sent by a roaming intelligent user for initiating a UCB service call and resolve the call request to obtain the calling user information and the called user information of the call. Then, the call processing module initiates a call to the calling user and the called user respectively according to the information of the calling user and the called user resolved, and establishes a connection between the two calls.

The call control module is adapted to trigger a called process of the calling user and a called process of the called user to the SCP to which the calling user pertains and the SCP to which the called user pertains based on CAMEL according to the information of the calling user and the called user resolved by the call processing module respectively, so that the SCP to which the calling user pertains is able to implement a charging process on the conversation of the calling user and the SCP to which the called user pertains is able to implement a charging process on the conversation of the called user.

The above call processing module and call control module may both be configured in the UCB SSP or may be configured in different network devices respectively. For example, the call processing module may be configured in the UCB SSP and the call control module may be configured in other network devices independent of the UCB SSP. When the call processing module and the call control module are both configured in the UCB SSP, the UCB SSP can have CAMEL 2 capability.

When the call control module is not configured in the UCB SSP, the UCB SSP may not have CAMEL capability, instead, the UCB SSP needs to have UCB service processing capability. Having UCB service processing capability means that the UCB SSP is able to identify and process a USSD request sent by a roaming intelligent user. In other words, the UCB SSP is able to resolve the USSD request, obtain calling number A and called number B therefrom, initiate an MT call to user A and user B respectively, and trigger a called process of the SCP. Moreover, after the call of user A and the call of user B are connected respectively, the UCB SSP is able to connect the two calls of user A and user B.

After the called process of the SCP to which the calling user pertains is triggered, a charging process is carried out on the conversation of the calling user. After the called process of the SCP to which the called user pertains is triggered, a charging process is carried out on the conversation of the called user. The above charging process of the SCP may employ the charging process of the prior art. Thus, the charging process of the SCP is not described in detail herein.

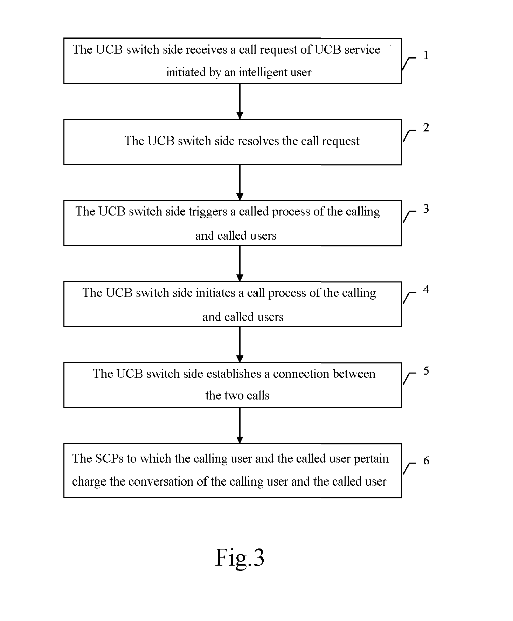

The method for implementing calling service according to one embodiment of the invention is described with reference to Figure 3. Figure 3 is a flow chart of the method for implementing a calling service according to one embodiment of the invention.

Step 1: The UCB switch receives a call request of a UCB service initiated by an intelligent user.

Step 2: The UCB switch resolves the call request and obtains the information of the calling and called users.

Step 3: The UCB switch triggers a called process of the calling user to the SCP to which the calling user pertains and triggers a called process of the called user to the SCP to which the called user pertains respectively according to the information of the calling and called users resolved.

Step 4: The UCB switch initiates a call process of the calling user and the called user respectively according to the information of the calling and called users resolved, so as to establish a call between the UCB switch and the calling user and a call between the UCB switch and the called user.

Step 5: The UCB switch establishes a connection between the two calls, and the calling user and the called user implement the conversation of UCB service according to the connection.

Step 6: The SCP to which the calling user pertains and the SCP to which the called user pertains implement a charging process on the conversation of the calling user and the called user respectively.

Taking the case that the UCB SSP triggers a called process of the calling user and the called user as an example, the method for implementing a calling service according to one embodiment of the invention is described in detail with reference to the drawings.

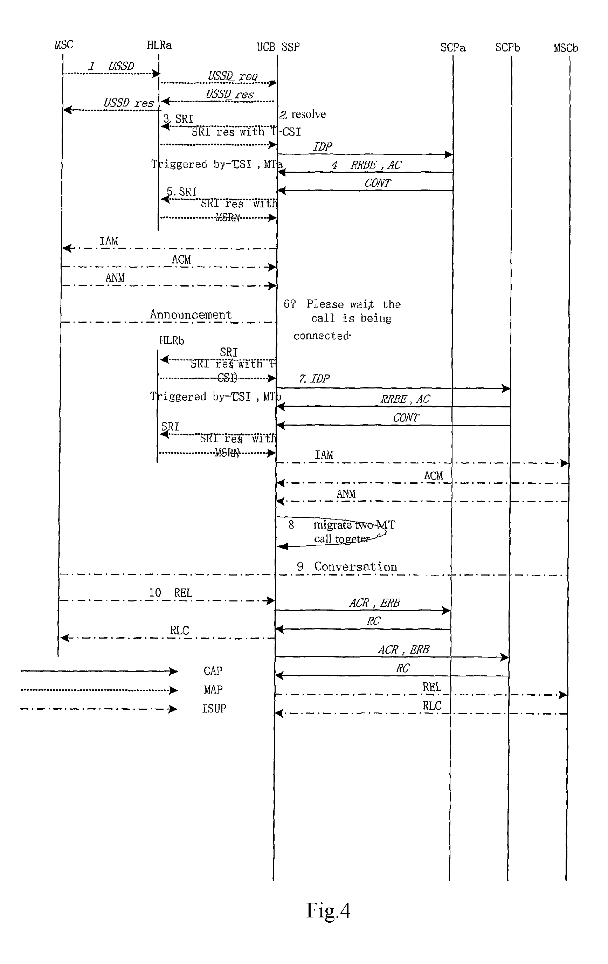

Figure 4 shows a method for implementing a calling service by triggering a call process of the calling and called users via a UCB SCP according to one embodiment of the invention.

Step 1: User A sends a USSD request for initiating a UCB call and the USSD request is sent to the UCB SSP via an HLR.

Step 2: The UCB SSP receives the USSD request and resolves calling number A and called number B from the USSD request.

Step 3: The UCB SSP has CAMEL 2 capability and sends Sending routing information (SRI) to the Home Location Register (HLR) of user A and obtains the subscription information, the UCB SSP sends an IDP message to the SCPa to which user A pertains according to the Terminated-CAMEL Subscription Information (T-CSI) of user A to trigger an MT called process of user A.

Step 4: The SCPa to which user A pertains authenticates the MT call of user A and instructs the UCB SSP to connect the call in accordance with a normal called process.

Step 5: The UCB SSP obtains the roaming number of user A from the HLR as instructed by the SCPa and implements a speech path connection on user A.

Step 6: After the UCB SSP connects user A, the UCB SSP plays for user A and notifies user A that "Please wait a minute, the call is being connected!"

Step 7: The UCB SSP performs the same operation on user B as that on user A, in other words, the UCB SSP sends an IDP message to the SCPb to which user B pertains to trigger an MT called process of user B, and then the UCB SSP carries out the speech path connection on user B as instructed by the SCPb.

Step 8: After the UCB SSP connects user B, the UCB SSP connects the two conversations of user A and user B, thus the conversation between user A and user B is implemented.

Step 9: During the conversation process between user A and user B, the SCPa to which user A pertains and the SCPb to which user B pertains implements a normal real-time charging and call control on user A and user B respectively.

Step 10: When the conversation ends because user A or user B hangs up and so on, the UCB SSP releases the call.

The system for implementing a calling service according to one embodiment of the invention is described as follows.

The system for implementing a calling service according to the embodiment of the invention includes: a UCB switch and an SCP. Here, the number of SCP is more than one, and the SCP at least includes the SCP to which the calling user pertains and the SCP to which the called user pertains. A call processing device is configured on the UCB switch.

The call processing device on the UCB switch receives a USSD request sent by a roaming intelligent user, and the call processing device resolves the USSD request to obtain the calling user information and the called user information, etc. After the call processing device obtains the calling user information and the called user information, the call processing device initiates a call process of the calling user to establish a call connection between the UCB switch and the calling user. The call processing device respectively establishes two call connections including a call connection between the UCB switch and the calling user and a call connection between the UCB switch and the called user. After the call processing device initiates the call process between the calling and called users, the call processing device combines the two call connections together, in other words, the call processing device combines the two call connections into a call connection between the calling user and the called user. Thus, a conversation of USSD Call Back service may be implemented between the calling user and the called user according to the connection combined and established by the call processing device. The call processing device further needs to trigger the intelligent network side to charge the calling user and the called user, in other words, the call processing device triggers a called process of the calling user to the SCP to which the calling user pertains and triggers a called process of the called user to the SCP to which the called user pertains. The call processing device may trigger the called processes of the calling user and the called user via CAMEL. In such a case, the call processing device needs to support CAMEL2.

After the call processing device triggers a called process of the calling user to the SCP to which the calling user pertains and triggers a called process of the called user to the SCP to which the called user pertains, the SCP to which the calling user pertains and the SCP to which the called user pertains charge the conversation of the user respectively. In the embodiment of the system according to the invention, the call processing device may trigger the SCP to which the calling user pertains, or may trigger the SCP to which the called user pertains. Specifically, trigger the SCP of one party or trigger the SCPs of both parties may be determined according to the actual charging situation in the network.

The above operation implemented by the call processing device may be implemented by a call processing module and a call control module.

The call processing module is adapted to receive a call request sent by a roaming intelligent user for initiating a UCB service call, and resolve the call request to obtain the calling user information and the called user information of the call. Then, the call processing module initiates a call to the calling user and the called user respectively according to the information of the calling user and the called user resolved, and establishes a connection between the two calls.

The call control module is adapted to trigger a called process of the calling user and a called process of the called user to the SCP to which the calling user pertains and the SCP to which the called user pertains based on CAMEL according to the information of the calling user and the called user resolved by the call processing module respectively, so that the SCP to which the calling user pertains can implement a charging process on the conversation of the calling user, and the SCP to which the called user pertains can implement a charging process on the conversation of the called user. It may be seen from the operation carried out by the call control module that, the call control module has a signaling processing capability, for example, the call control module has a CAMEL signaling processing capability and can trigger a called process of the calling user and the called user to the SCPs to which the calling user and the called user pertain via a CAMEL signaling.

The above call processing module and call control module may both be configured in the UCB SSP on the UCB switch, or be respectively configured in different network devices on the UCB switch. For example, the call processing module may be configured in the UCB SSP, and the call control module may be configured in other network devices independent of the UCB SSP. When the call processing module and the call control module are both configured in the UCB SSP, the UCB SSP may have CAMEL 2 capability. When the call control module is not configured in the UCB SSP, the UCB SSP may not have CAMEL capability and needs to have UCB service processing capability. Having UCB service processing capability means that the UCB SSP can identify and process a USSD request sent by a roaming intelligent user. In other words, the UCB SSP can resolve the USSD request, obtain calling number A and called number B therefrom, initiate an MT call to user A and user B respectively, and trigger a called process of the SCP. Moreover, after the call of user A and the call of user B are connected respectively, the UCB SSP can migrate the two calls of user A and user B together.

One embodiment of the invention further provides a call processing device configured on the UCB switch. The call processing device includes a call processing module and a call control module. The call processing device may be configured in the UCB SSP and so on. The call processing module and the call control module are as described in the above embodiments of the method and the system according to the invention, and repeated descriptions are omitted herein.

One embodiment of the invention further provides an SSP including a call processing module and a call control module. The call processing module and the call control module are described in the above embodiments of the method and the system according to the invention, and repeated descriptions are omitted herein.

One embodiment of the invention further provides a UCB switching system including a call processing module and a call control module. The call processing module and the call control module are described in the above embodiments of the method and the system according to the invention, and repeated descriptions are omitted herein.

According to one embodiment of the invention, the UCB switch may establish a conversation between the calling user and the called user without cooperating with an intelligent network, so that the process in which the UCB switch establishes a call by performing signaling interaction with the intelligent network may be avoided. The UCB switch according to the embodiment of the invention may trigger a called process between the calling and called users using CAMEL. When the UCB switch triggers a called process between the calling and called users using CAMEL, the network device on the UCB switch, such as the UCB SSP, may need to support CAMEL2. Therefore, the technical solutions according to the embodiments of the invention have good feasibility and are easy to implement. The embodiment of the invention provides a new technical solution for implementing a calling service to roaming intelligent users. Moreover, according to the embodiments of the invention, it is convenient to carry out a charging process on roaming intelligent users by triggering the SCP to charge the conversation of the calling and called users. The embodiments of the invention are applicable for UCB service of prepaid users and also be applicable for UCB service of non-prepaid users.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims and their equivalents.

## Claims

1. A method for implementing a calling service, comprising:
receiving and resolving, by an Unstructured Supplementary Service Data CALL BACK, UCB switch , a call request of a UCB service initiated by an intelligent user, initiating a call process of a calling user and a call process of a called user respectively according to information of the calling and called users resolved, and establishing a call between the UCB switch and the calling user and a call between the UCB switch and the called user;
establishing, by the UCB switch, a connection between the two calls so that the calling user and the called user implement a conversation of the UCB service according to the connection; and
triggering, by the UCB switch, the SCP to which the calling user pertains and the SCP to which the called user pertains to charge the conversation respectively.

2. The method according to claim 1, further comprising, triggering, by the UCB switch, a called process of the calling user to the SCP to which the calling user pertains based on Customized Application for Mobile Enhanced Logic protocol, CAMEL, and triggering a called process of the called user to the SCP to which the called user pertains based on CAMEL.

3. A system for implementing a calling service, comprising: an Unstructured Supplementary Service Data CALL BACK, UCB, switch and a Service Controlling Point, SCP, wherein the UCB switch comprises:
a call processing device, adapted to receive and resolve a call request of a UCB service initiated by a roaming intelligent user, trigger a SCP to which a calling user pertains and a SCP to which a called user pertains, initiate a call process of the calling user and a call process of the called user respectively, establish a call between the UCB switch and the calling user and a call between the UCB switch and the called user and establish a connection between the two calls; and
an SCP, adapted to implement a charging process on a conversation between the calling user and the called user based on the connection according to the triggering.

4. The system according to claim 3, wherein, the call processing device comprises:
a call processing module, adapted to receive the call request of the UCB service sent by the roaming intelligent user, resolve information of the calling user and the called user from the call request, initiate a call to the calling user and the called user respectively according to the information of the calling user and the called user resolved, and then establish the connection between the two calls; and
a call control module, adapted to trigger a called process of the calling user and a called process of the called user respectively to the SCP to which the calling user pertains and the SCP to which the called user pertains according to the information of the calling user and the called user resolved by the call processing module.

5. The system according to claim 4, wherein, the call processing module is located in a Service Switch Point, SSP, on the UCB switch, and the call control module is located in a network device on the UCB switch independent of the SSP; or, the call processing module and the call control module are both located in the SSP on the UCB switch.

6. A call processing device located on an Unstructured Supplementary Service Data CALL BACK, UCB, switch side, comprising:
a call processing module, adapted to receive a call request of a UCB service sent by a roaming intelligent user, resolve information of a calling user and a called user from the call request, initiate a call to the calling user and a call to the called user respectively according to the information of the calling user and the called user resolved, and establish a connection between the two calls; and
a call control module, adapted to trigger a called process of the calling user and a called process of the called user respectively to the SCP to which the calling user pertains and the SCP to which the called user pertains according to the information of the calling user and the called user resolved by the call processing module.

7. The device according to claim 6, wherein, the call processing module is located in a Service Switch Point, SSP, on a UCB switch, and the call control module is located in a network device on the UCB switch independent of the SSP; or, the call processing module and the call control module are both located in the SSP on the UCB switch.

8. A Service Switch Point, SSP, comprising:
a call processing module, adapted to receive a call request of an Unstructured Supplementary Service Data CALL BACK, UCB, service sent by a roaming intelligent user, resolve information of a calling user and a called user from the call request, initiate a call to the calling user and a call to the called user respectively according to the information of the calling user and the called user resolved, and establish a connection between the two calls; and
a call control module, adapted to trigger a called process of the calling user and a called process of the called user respectively to the SCP to which the calling user pertains and the SCP to which the called user pertains according to the information of the calling user and the called user resolved by the call processing module.

9. An Unstructured Supplementary Service Data CALL BACK, UCB, switching system, comprising:
a call processing module, adapted to receive a call request of an Unstructured Supplementary Service Data CALL BACK, UCB, service sent by a roaming intelligent user, resolve information of a calling user and a called user from the call request, initiate a call to the calling user and a call to the called user respectively according to the information of the calling user and the called user resolved, and establish a connection between the two calls; and
a call control module, adapted to trigger a called process of the calling user and a called process of the called user respectively to the SCP to which the calling user pertains and the SCP to which the called user pertains according to the information of the calling user and the called user resolved by the call processing module.

10. The system according to claim 9, wherein, the call processing module is located in a Service Switch Point, SSP, on the UCB switch, and the call control module is located in a network device on the UCB switch independent of the SSP; or, the call processing module and the call control module are both located in the SSP on the UCB switch.
